# EUROPÄISCHE PATENTANMELDUNG

(11) **EP 0 833 531 A2**
(43) Veröffentlichungstag der Anmeldung: **01.04.1998**
(21) Anmeldenummer: 97116740.8
(22) Anmeldetag: 25.09.1997
(51) Int. Cl.: H04Q 7/22

(54) **Mobilfunksystem zur Behandlung von Gruppenanrufen**

(30) Priorität: 30.09.1996 DE 19640449
(71) Anmelder: SIEMENS AKTIENGESELLSCHAFT, 80333 München (DE)
(72) Erfinder: Wiehe, Ulrich, 36251 Bad Hersfeld (DE); Prüser, Jürgen, 36251 Bad Hersfeld (DE)

(57) **Zusammenfassung**

Im Mobilfunksystem ist eine Gruppenanruf-Datenbasis, die Gruppenanrufdaten zur Behandlung der Gruppenanrufe enthält, vorgesehen, die eine zentrale Datenbasis (MGCR), die mit einem Betriebs- und Wartungsteilsystem (OMS) des Mobilfunksystems verbunden ist, und zumindestens eine dezentrale Datenbasis (SGCR), die jeweils mit einer Mobilvermittlungsstelle (MSC1...) verbunden ist, aufweist. Die zentrale Datenbasis (MGCR) ist mit den dezentralen Datenbasen (SGCR) verbunden, um Änderungen an den Gruppenanrufdaten von der zentralen Datenbasis (MGCR) durchzuführen und Daten nur zu den von den Änderungen betroffenen dezentralen Datenbasen (SGCR) zu übertragen. Der dezentrale Teil der Gruppenanruf-Datenbasis ermöglicht jeweils einen schnellen Verbindungsaufbau und einen Verzicht auf zusätzliche Signalisierungslast, während der zentrale Teil der Gruppenanruf-Datenbasis eine Vereinfachung der Administration der Gruppenanrufdaten und eine Beschränkung der Signalisierung auf die - üblicherweise seltenen - Fälle einer Änderung der Daten in der Datenbasis über das Betriebs- und Wartungsteilsystem des Mobilfunksystembetreibers bewirkt.

## Beschreibung

Die Erfindung betrifft ein Mobilfunksystem zur Behandlung von jeweils an eine Gruppe von Funkteilnehmern gerichteten Gruppenanrufen gemäß dem Oberbegriff des Patentanspruchs 1.

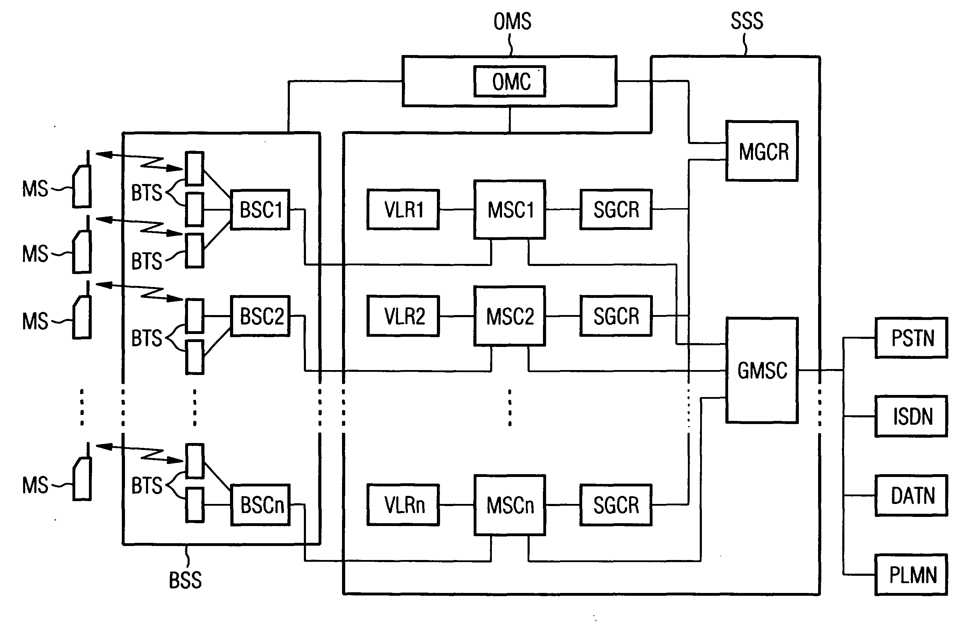

Aus dem Aufsatz 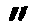 D1 - Das Mobilfunk-Netz der Deutschen Telekom MobilNet", Unterrichtsblätter Jg. 49, 6/96, Seiten 288 bis 297 ist ein aus Funkzellen aufgebautes digitales Mobilfunksystem, basierend auf dem GSM-Standard (Global System for Mobile Communication), bekannt. Das Mobilfunksystem besteht aus in Bild 2 dargestellten Grundelementen, von denen ein funktechnisches Teilsystem die Übertraguns- und Steuerfunktionen für Kommunikationsverbindungen von bzw. zu Mobilstationen von Funkteilnehmern übernimmt und ein vermittlungstechnisches Teilsystem mit Mobilvermittlungsstellen mobilfunkspezifische Vermittlungsfunktionen durchführt und mit Datenbasen Teilnehmerdaten sowie Daten für die Verbindungsbehandlung bei Anrufen verwaltet. Darüber hinaus ist mit dem funktechnischen Teilsystem und mit dem vermittlungstechnischen Teilsystem ein Betriebs- und Wartungsteilsystem verbunden, das Funktionen für den Betrieb des Mobilfunksystems und für die Erfassung von Informationen über das Mobilfunksystem durchführt.

Gemäß den GSM-Empfehlungen 03.68 und 03.69, Versionen 4.0.0, von Januar 1995 besteht in dem GSM-Mobilfunksystem die Möglichkeit, Gruppenanrufdienste (VGCS, Voice Group Call Service bzw. VBS, Voice Broadcast Service) zu nutzen, bei denen jeweils ein Gruppenanruf an eine Gruppe von Funkteilnehmern gerichtet wird, für die der entsprechende Dienst vorgesehen ist. Dabei befinden sich die Teilnehmer der Gruppe in einem - in der Regel aus mehreren Funkzellen bestehenden - Gruppenanruf-Versorgungsbereich (Service Area), der von einer Mobilvermittlungsstelle des Mobilfunksystems betreut wird. Jeder Gruppenanruf ist an einer speziellen Teilnehmerrufnummer erkennbar, die zumindestens eine Versorgungsbereichsinformation (service area identity) zur Kennzeichnung des Gruppenanruf-Versorgungsbereichs und eine Gruppeninformation (group identity) zur Kennzeichnung der vom Gruppenanruf betroffenen Gruppe von Teilnehmern aufweist - siehe z.B. GSM-Empfehlung 03.68, Seiten 17 ff. Beim Gruppenanruf wird zwischen einem von der Funkteilnehmerstation aus einer Funkzelle des Versorgungsbereichs initiierten Anruf und einem aus einem anderen Kommunikationsnetz, beispielsweise einem leitungsgebundenen Festnetz, eintreffenden Anruf unterschieden. Als Beispiel für einen in einem fremden Netz initiierten Gruppenanruf sei angenommen, daß ein ausgewähltes Gruppenmitglied (Dispatcher) mit einer Mehrzahl von Funkteilnehmern, die sich in Funkzellen eines Gruppenanruf-Versorgungsbereichs aufhalten, kommunizieren möchte. Das ausgewählte Gruppenmitglied, das beispielsweise der Einsatzleiter einer Gruppe von Mitarbeitern ist, verfügt dabei über einen Teilnehmeranschluß im zugehörigen Festnetz, kann jedoch auch ein Funkteilnehmer sein.

Die Realisierung der gebietsorientierten Gruppenanrufe in dem Mobilfunksystem erfordert eine Datenhaltung in einer Gruppenanruf-Datenbasis (group call register), in der Gruppenanrufdaten (group call attributes) verwaltet werden - siehe z.B. GSM-Empfehlung 03.68, Seite 8 (definitions) und Seite 15 (Kapitel 8.1). Die Implementierung der Gruppenanruf-Datenbasis kann entweder dezentral - z.B. bei jeder Mobilvermittlungsstelle - oder alternativ zentral - z.B. als Heimatdatenbasis (home location register) oder als Dienstesteuerungsstelle (service control point) eines Intelligenten Netzes - erfolgen. Die zentrale Lösung hat den Nachteil eines langsameren Verbindungsaufbaus und einer höheren Signalisierungslast, während die dezentrale Lösung einen hohen Verwaltungsaufwand für die Daten mit sich bringt, da diese an zahlreichen Stellen im System administriert werden müssen.

Es ist Aufgabe der vorliegenden Erfindung, ein Mobilfunksystem derart zu gestalten, daß unter Einbeziehung der Gruppenanruf-Datenbasis eine möglichst optimale Behandlung der Gruppenanrufe erzielt werden kann.

Diese Aufgabe wird gemäß der Erfindung durch ein Mobilfunksystem gelöst, bei dem die Gruppenanruf-Datenbasis eine zentrale Datenbasis, die mit dem Betriebs- und Wartungsteilsystem verbunden ist, und zumindestens eine dezentrale Datenbasis, die jeweils mit einer Mobilvermittlungsstelle verbunden ist, aufweist und bei dem die zentrale Datenbasis mit den dezentralen Datenbasen verbunden ist, um Änderungen an den Gruppenanrufdaten von der zentralen Datenbasis durchzuführen und Daten nur zu den von den Änderungen betroffenen dezentralen Datenbasen zu übertragen. Auf diese Weise wird die Gruppenanruf-Datenbasis als Kombination von zentraler und dezentraler Lösung realisiert, bei der administrative Änderungen der Gruppenanrufdaten ausschließlich an der zentralen Datenbasis durchgeführt und die Änderungen nur den dezentralen Datenbasen, die von den Änderungen betroffen sind, mitgeteilt werden.

Die dezentrale Datenbasis umfaßt die Daten für den jeweiligen Verantwortungsbereich einer Mobilvermittlungsstelle, was insbesondere den Verbindungsaufbau betrifft. So brauchen die bei Gruppenanrufen für den Verbindungaufbau bzw. -abbau notwendigen Datenbasisabfragen lediglich intern in der Mobilvermittlungsstelle ausgeführt und dabei temporäre Daten, die während des Bestehens eines Gruppenanrufs anfallen, nur in der jeweiligen dezentralen Datenbasis gespeichert zu werden. Dies ermöglicht einen schnellen Verbindungsaufbau und einen Verzicht auf zusätzliche Signalisierungslast. Die zentrale Datenbasis bewirkt eine Vereinfachung der Administration der Gruppenanrufdaten und eine Beschränkung der Signalisierung auf die - üblicherweise seltenen - Fälle einer Änderung der Daten in der Datenbasis über das Betriebs- und Wartungsteilsystem des Mobilfunksystembetreibers.

Die Erfindung wird anhand eines in einer Figur dargestellten Ausführungsbeispiels erläutert, die in einem Blockschaltbild die grundsätzliche Struktur des Mobilfunksystems zur Behandlung der Gruppenanrufe mit einer Aufteilung der Gruppenanruf-Datenbasis in eine zentrale Datenbasis und mehrere dezentrale Datenbasen zeigt.

Das Mobilfunksystem, basierend auf dem GSM-Standard, umfasst mehrere Grundelemente, die aus einem funktechnischem Teilsystem BSS, einem vermittlungstechnischem Teilsystem SSS und aus einem Betriebs- und Wartungsteilsystem OMS bestehen. Dabei übernimmt das funktechnische Teilsystem BSS die Übertragungs- und Steuerfunktionen für Kommunikationsverbindungen von bzw. zu Mobilstationen MS von Funkteilnehmern. Dabei ist der gesamte Versorgungsbereich des Mobilfunksystems in eine große Anzahl von Funkzellen unterteilt, in denen die Verbindungen vom Mobilfunksystem zu den Mobilstationen MS über Basis-Sende-Empfangsstationen BTS und Verbindungen von den Mobilstationen MS zu den Basis-Sende-Empfangsstationen BTS des Mobilfunksystems über eine Luftschnittstelle aufgebaut, aufrechterhalten und abgebaut werden können. Eine oder mehrere Basis-Sende-Empfangsstationen BTS werden von einer Basisstationssteuerung - im vorliegenden Beispiel von den Basisstationssteuerungen BSC1, BSC2...BSCn - bedient. Die über den Gesamtversorgungsbereich des Mobilfunksystems verteilten Basis-Sende-Empfangsstationen BTS bilden Funkstationen, die alle jeweils am Antennenstandort erforderlichen Funktionen bereitstellen. Üblicherweise bedient die Basis-Sende-Empfangsstation BTS eine Funkzelle, die jedoch durch den Einsatz von Richtantennen in zwei oder mehr sektorierte Zellen aufgeteilt werden kann. Den intelligenten Teil des funktechnischen Teilsystems BSS bilden die Basisstationssteuerungen BSC1..., die die wesentlichen Steuerfunktionen bei der Funkverarbeitung übernehmen. Darüber hinaus bilden die Basisstationssteuerungen BSC1... die Schnittstelle des funktechnischen Teilsystems BSS zu dem vermittlungstechnischem Teilsystem SSS dadurch, dass sie mit dessen Mobilvermittlungsstellen verbunden sind.

Im vorliegenden Beispiel umfasst das vermittlungstechnische Teilsystem SSS die Mobilvermittlungsstellen MSC1,MSC2...MSCn, von denen jeweils die mobilfunkspezifischen Vermittlungsfunktionen zur Verbindungssteuerung durchgeführt werden. Dabei kann jede Mobilvermittlungsstelle MSC1... eine Verbindung zwischen dem Mobilfunksystem und einem Festnetz, beispielsweise dem öffentlichen Fernsprechnetz PSTN oder dem diensteintegrierenden Telekommunikationsnetz ISDN oder einem Datennetz DATN, sowie zwischem dem eigenen Mobilfunksystem und einem anderen Mobilfunksystem PLMN oder innerhalb des eigenen Mobilfunksystems zwischen jeweils zwei Mobilstationen MS vermitteln. Bei einer Verbindung zwischen zwei Mobilstationen MS innerhalb eines Mobilfunksystems wird die Verbindung von einer Mobilvermittlungsstelle zu einer anderen Mobilvermittlungsstelle oder innerhalb ein- und derselben Mobilvermittlungsstelle aufgebaut.

Für die Kommunikationsverbindungen zu anderen Telekommunikationssystemen weist das vermittlungstechnische Teilsystem SSS eine Zugangs-Mobilvermittlungsstelle GMSC auf, an die die Mobilvermittlungsstellen MSC1...MSCn angeschlossen sind. Die Zugangs-Mobilvermittlungsstelle GMSC bildet somit die Schnittstelle für jeweils aus einem anderen Telekommunikationssystem ankommende Anrufe bzw. für jeweils zu anderen Telekommunikationssystemen abgehende Anrufe, die in einer Mobilvermittlungsstelle des Mobilfunksystems vermittelt werden. Mit der jeweiligen Mobilvermittlungsstelle MSC1, MSC2...MSCn ist eine Teilnehmerdatenbasis (Besucherregister) VLR1, VLR2 ...VLRn in einem physikalischen Systemknoten realisiert, um die Teilnehmerdaten der in einem Versorgungsbereich der Mobilvermittlungsstelle sich aktuell aufhaltenden Funkteilnehmer für die Verbindungsbehandlung bereitzustellen. Darüber hinaus gibt es im vermittlungstechnischen Teilsystem SSS weitere Teilnehmerdatenbasen, von denen zumindestens eine (nicht dargestellte) zentrale Teilnehmerdatenbasis (Heimatregister) die Teilnehmerdaten der im Mobilfunksystem registrierten Funkteilnehmer permanent speichert und darüber hinaus Informationen über die Zugangsberechtigung eines Funkteilnehmers zum Mobilfunksystem, sowie über das für den Funkteilnehmer auf Grund seines aktuellen Aufenthaltsorts zuständigen Besucherregister enthält.

Mit dem funktechnischen Teilsystem BSS und mit dem vermittlungstechnischen Teilsystem SSS ist ein Bedienungs- und Wartungsteilsystem OMS verbunden, das Bedienungs- und Wartungszentren OMC als Systemelemente aufweist. Dabei ist vorzugsweise ein Bedienungs- und Wartungszentrum für das funktechnische Teilsystem BSS und ein weiteres Bedienungs- und Wartungszentrum für das vermittlungstechnische Teilsystem SSS vorgesehen. Die Bedienungs- und Wartungszentren OMC übernehmen Betriebs- und Wartungsfunktionen wie beispielsweise die zentrale Verwaltung der Netzelemente im funktechnischen Teilsystems BSS und im vermittlungstechnischen Teilsystem SSS, die Kommunikation zu diesen Netzelementen über beispielsweise ein Datennetz sowie die Kommunikation zwischen bestimmten Netzelementen des vermittlungstechnischen Teilsystems SSS und einem übergreifenden Bediensystem. Darüber hinaus stellt das Betriebs- und Wartungsteilsystem OMS die Schnittstelle zwischen einem Mobilfunksystembetreiber und den jeweiligen Netzelementen des funktechnischen Teilsystems BSS und des vermittlungstechnischen Teilsystems SSS dar.

Für die Behandlung von Gruppenanrufen, die an eine Gruppe von Funkteilnehmern jeweils gerichtet sind, ist gemäß den genannten GSM-Empfehlungen 03.68 und 03.69 zusätzlich zu den beschriebenen Teilnehmerdatenbasen eine Gruppenanruf-Datenbasis (group call register) zu implementieren, die Gruppenanrufdaten (group call attributes) für die Verbindungssteuerung bei Gruppenanrufen enthält. So umfassen diese Gruppenanrufdaten beispielsweise eine Liste von Funkzellen eines Versorgungsbereichs (service area). Dabei wird durch eine Versorgungsbereichsinformation (service area identity) zur Kennzeichnung des Gruppenanruf-Versorgungsbereichs und durch eine Gruppeninformation (group identity) zur Kennzeichnung der vom Gruppenanruf betroffenen Gruppe von Teilnehmern auf die Liste von Funkzellen verwiesen, denen jeweils eine Zellenidentität (cell identity) zuordenbar ist. Darüber hinaus gehört zu den Gruppenanrufdaten beispielsweise eine Liste von ausgewählten Funkteilnehmern (dispatcher) der zugeordneten Gruppe, die entweder zum Starten eines derartigen Gruppenanrufs oder zum Auslösen des Gruppenanrufs berechtigt sind (siehe z.B. GSM-Empfehlung 03.69, Seite 14, Kapitel 8.1). Gemäß der Erfindung wird diese Gruppenanruf-Datenbasis aus einer Kombination einer zentralen Datenbasis MGCR und üblicherweise mehreren dezentralen Datenbasen SGCR im vermittlungstechnischen Teilsystem SSS des Mobilfunksystems realisiert. Die zentrale Datenbasis MGCR ist mit dem Betriebs- und Wartungsteilsystem OMS verbunden, um administrative Änderungen an den Gruppenanrufdaten, die über das Betriebs- und Wartungsteilsystem OMS - beispielsweise vom Netzbetreiber - gewünscht sind, ausschließlich durch die zentrale Datenbasis MGCR nur an einer Stelle im Mobilfunksystem durchzuführen. Dadurch wird eine Vereinfachung der Administration der Gruppenanrufdaten und eine Beschränkung der Signalisierung auf die seltenen Fälle der Änderung der Gruppenanruf-Datenbasis über das Bedienungs- und Wartungsteilsystem OMS erzielt. Die dezentralen Bestandteile der Gruppenanruf-Datenbasis sind in Form der dezentralen Datenbasen SGCR an die jeweiligen Mobilvermittlungsstellen MSC1, MSC2...MSCn angeschlossen, so dass die für die Verbindungssteuerung erforderlichen Daten im jeweiligen Verantwortungsbereich der Mobilvermittlungsstelle gespeichert sind.

Die für den Verbindungsaufbau bei einem Gruppenanruf notwendigen Datenbasisabfragen können intern von der Mobilvermittlungsstelle durch Ansteuerung der dezentralen Datenbasis SGCR mit den für die Behandlung des Gruppenanrufs notwendigen Daten ausgeführt werden. Temporäre Daten, die nur während des Bestehens eines Gruppenanrufs anfallen, sind somit nur jeweils in der dezentralen Datenbasis SGCR gespeichert. Dadurch läßt sich ein schnellerer Verbindungsaufbau erzielen und eine zusätzliche Signalisierungslast im Mobilfunksystem gegenüber einer Lösung, bei der alle Daten an zentraler Stelle im Mobilfunksystem gespeichert werden, vermeiden. Durch die Funktionsaufteilung des zur Behandlung von Gruppenanrufen vorgesehenen Gruppenanruf-Datenbasis in einen zentralen Teil - die zentrale Datenbasis MGCR - und in einen dezentralen Teil - die an eine Mobilvermittlungsstelle angeschaltete dezentrale Datenbasis SGCR - können die Nachteile, die bei einer ausschließlich zentralen Lösung oder bei einer ausschließlich dezentralen Lösung gegeben sind - umgangen und eine optimale Behandlung der Gruppenanrufe in Bezug auf Verbindungsaufbauzeit und Signalisierungslast sowie in Bezug auf eine möglichst einfache Verwaltung der Gruppenanrufdaten durch die gesonderte Gruppenanruf-Datenbasis erreicht werden. Als Beispiel für administrative Änderungen an der Gruppenanruf-Datenbasis, die über das Betriebs- und Wartungsteilsystem OMS an der zentralen Datenbasis MGCR durchgeführt werden, sind beispielsweise eine Erweiterung der Anzahl der Funkzellen für einen Versorgungsbereich oder die Änderung der Zellstruktur des zellularen Mobilfunksystems an sich genannt. Von der zentralen Datenbasis MGCR werden die Änderungen der Gruppenanrufdaten nur den dezentralen Datenbasen SGCR, die von den Änderungen betroffen sind, über beispielsweise ein mobilfunkspezifisches Anwenderprotokoll (MAP, Mobile Application Part) mitgeteilt. Zuvor erkennt die zentrale Datenbasis MGCR selbständig anhand der vom Betriebs- und Wartungsteilsystem OMS eintreffenden Informationen, an welche der dezentralen Datenbasen SGCR die gewünschten Änderungen weiterzuleiten sind.

Der Gruppenanruf kann beispielsweise von einem Festnetzteilnehmer des öffentliches Fernsprechnetzes PSTN durch Wahl einer speziellen Rufnummer, die den Anruf als Gruppenanruf kennzeichnet, initiiert werden. Die Gruppenanrufnummer, anhand der ein Anruf an eine Gruppe von Funkteilnehmern in dem Gruppenanruf-Versorgungsbereich (Service Area) gerichtet wird, umfaßt zumindestens eine Verkehrsausscheidungsziffer (die 0), die das Verlassen des Festnetzes signalisiert, einen Mobilfunksystemzugangscode (Country Code, National Destination Code), eine Versorgungsbereichsinformation zur Identifikation des Gruppenanruf-Versorgungsbereichs und die Gruppeninformation zur Identifikation der vom Gruppenanruf betroffenen Gruppe von Funkteilnehmern. Der Mobilfunksystemzugangscode umfaßt dabei eine Landeskennzahl (Country Code), die das jeweilige Land in dem länderübergreifenden internationalen GSM-Mobilfunksystem angibt, und eine nationale Dienstkennzahl (National Destination Code), die den nationalen Versorgungsbereich in diesem Land bestimmt. Dabei ist es möglich, daß pro Land mehr als eine nationale Dienstkennzahl vergeben worden ist. Zusätzlich kann ein Dienstindikator zur Kennzeichnung eines Gruppenanrufdienstes vorhanden sein. So sind an einem Gruppenanrufdienst (VGCS, Voice Group Call Service) zur Kommunikation einer Gruppe von Teilnehmern mehrere Teilnehmer in einer Funkzelle beteiligt, während bei einem anderen Gruppenanrufdienst (VBS, Voice Broadcast Service) von einem Teilnehmer die Kommunikation zu einer Gruppe von jeweils in einem Gruppenanruf-Versorgungsbereich befindlichen Teilnehmern begonnen wird.

Handelt es sich bei dem Anruf um einen aus dem Festnetz PSTN ankommenden Anruf, wird die Verbindung zu der Zugangs-Mobilvermittlungsstelle GMSC im Mobilfunksystem aufgebaut. Jede Zugangs-Mobilvermittlungsstelle dient im Mobilfunksystem als Schnittstelle zu anderen Netzen, um ankommende Anrufe von dort entgegenzunehmen bzw. abgehende Anrufe dorthin auszusenden. Gemäß dem GSM-Verfahren empfängt die Zugangs-Mobilvermittlungsstelle GMSC in einer Adressennachricht (Initial Adress Message) eine internationale Funkteilnehmerrufnummer (MSISDN), um die Verbindung zu der gewünschten Gruppe von Funkteilnehmern herzustellen. Die Zugangs-Mobilvermittlungsstelle GMSC sendet üblicherweise die Funkteilnehmerrufnummer zu dem richtigen Heimatregister (nicht dargestellt), das eine temporär vergebene Aufenthaltsrufnummer (MSRN) von dem für die Gruppe zuständigen Besucherregister auf Anforderung empfängt. Das Heimatregister liefert die Aufenthaltsrufnummer und eine Adresse der Mobilvermittlungsstelle (Anker-Mobilvermittlungsstelle), die die Funkzellen des Gruppenanruf-Versorgungsbereichs bedient, an die Zugangs-Mobilvermittlungsstelle GMSC weiter. Die (Anker-Mobilvermittlungsstelle) frägt die jeweilige dezentrale Datenbasis SGCR ab und erhält die Gruppenanrufdaten, um die Anrufverbindung zu den Funkteilnehmern der angerufenen Gruppe über die entsprechenden Funkeinrichtungen des funktechnischen Teilsystems BSS in den jeweiligen Funkzellen durchzuführen.

Alternativ zur Heimatregister-Abfrage entscheidet die Zugangs-Mobilvermittlungsstelle GMSC auf Grund der empfangenen Versorgungsbereichsinformation, welche Mobilvermittlungsstelle die Anker-Mobilvermittlungsstelle darstellt. Dies ist möglich, wenn zum Einrichtungszeitpunkt der Gruppenanrufe ständige Leitwegkennungen für die Mobilvermittlungsstellen, die Funkzellen von Gruppenanruf-Versorgungsbereichen bedienen, reserviert werde. Durch diese ständigen Leitwegkennungen, ist jeweils die Versorgungsbereichsinformation der Mobilvermittlungsstelle, die für den Gruppenanruf-Versorgungsbereich zuständig ist, fest zugeordnet. Unter Verwendung der ständigen Leitwegkennung für die ausgewählte Mobilvermittlungsstelle erfolgt somit in der Zugangs-Mobilvermittlungsstelle GMSC eine Leitweglenkung direkt zu der Anker-Mobilvermittlungsstelle, die die Funkzellen des vom Anruf betroffenen Gruppenanruf-Versorgungsbereichs verwaltet und steuert. Die ständige Leitwegkennung weist beipsielsweise eine Identifikationsziffer auf, durch die die ständige Leitwegkennung von jeder üblichen temporären Aufenthaltsrufnummer, die bei der oben beschriebenen Teilnehmerdatenbasisabfrage vorübergehend vergeben wird, sicher unterschieden werden kann. Die Identifikationsziffer ermöglicht außerdem eine Unterscheidung zwischen verschiedenen Gruppenanrufdiensten - beispielsweise zwischen den oben genannten beiden Diensten (VGCS/VBS).

Die ausgewählte Mobilvermittlungsstelle - z.B. MSC1 - erkennt an der eintreffenden Identifikationsziffer, daß es sich um eine ständige Leitwegkennung für einen Gruppenanruf handelt, und greift mit der eintreffenden Versorgungsbereichsinformation und der eintreffenden Gruppeninformation auf die dezentrale Datenbasis SGCR zu. Die Datenbasis SGCR stellt die für den Verbindungsaufbau bei Gruppenanrufen notwendigen Parameter zur Verfügung, um die Anrufverbindung zu den Funkteilnehmern der angerufenen Gruppe über die entsprechenden Funkeinrichtungen des funktechnischen Teilsystems BSS in den jeweiligen Funkzellen zu ermöglichen. Für den Fall, daß ein identischer Gruppenanruf bereits existiert, wird die neue Anrufverbindung hinzugeschaltet und keine eigene Verbindung aufgebaut.

Für den Fall, daß der Gruppenanruf-Versorgungsbereich über den Mobilvermittlungsstellen-Versorgungsbereich der Mobilvermittlungsstelle MSC1 hinausgeht, werden weitere Funkzellen dieses Gruppenanruf-Versorgungsbereichs von einer weiteren Mobilvermittlungsstelle (Relais-Mobilvermittlungsstelle) bedient. Dabei wird der Gruppenanruf anhand einer für die Relais-Mobilvermittlungsstelle reservierten ständigen Leitwegkennung von der Mobilvermittlungsstelle MSC1 zu dieser Relais-Mobilvermittlungsstelle direkt weitergelenkt. Durch die feste Zuordnung der Versorgungsbereichsinformation zu der Relais-Mobilvermittlungsstelle, erkennbar an der ständigen Leitwegkennung, erfolgt in der Mobilvermittlungsstelle MSC1 die entsprechende Leitweglenkung. Die Mobilvermittlungsstelle MSC1 erkennt auf Grund der eintreffenden Versorgungsbereichsinformation, daß der Gruppenanruf-Versorgungsbereich den eigenen Mobilvermittlungsstellen-Versorgungsbereich überschreitet.

Jeder Versorgungsbereich wird durch eine Liste von Funkzellen bestimmt, die in diesem Versorgungsbereich von der jeweiligen Mobilvermittlungsstelle - z.B. MSC1 - bedient werden. Gibt es eine Änderung in der Liste durch zum Versorgungsbereich hinzukommende Funkzellen oder durch vom Versorgungsbereich wegfallende Funkzellen, so wird dies ausschließlich in der zentralen Datenbasis MGCR geändert und zumindestens der betroffenen dezentralen Datenbasis SGCR der Mobilvermittlungsstelle MSC1 - gegebenenfalls auch noch weiteren von der Änderung der Liste betroffenen Datenbasen SGCR anderer Mobilvermittlungsstellen - mitgeteilt. Der eigentliche Verbindungsaufbau für den Gruppenanruf wird von der Änderung direkt nicht beeinflußt. Mit den beim Einrichten der Gruppenanrufe jeweils reservierten ständigen Leitwegkennungen können auch Gruppenanrufe zu Mobilvermittlungsstellen des Mobilfunksystems gelenkt werden, wenn der Gruppenanruf von einer Funkteilnehmerstation aus einer Funkzelle initiiert wird, die im Zuständigkeitsbereich der Mobilvermittlungsstelle für die Betreuung des Gruppenanruf-Versorgungsbereichs liegt. Die Reservierung der ständigen Leitwegkennungen kann beispielsweise von dem Bedienungs- und Wartungszentrum OMC des Betriebs- und Wartungsteilsystems OMS durchgeführt und überwacht werden.

## Patentansprüche

1. Mobilfunksystem zur Behandlung von jeweils an eine Gruppe von Funkteilnehmern gerichteten Gruppenanrufen, mit einem funktechnischen Teilsystem (BSS) zur Durchführung von Übertragungs- und Steuerfunktionen für Kommunikationsverbindungen von/zu Mobilstationen der Funkteilnehmer, mit einem vermittlungstechnischen Teilsystem (SSS), das Mobilvermittlungsstellen (MSC1 ... GMSC) zur Durchführung von mobilfunkspezifischen Vermittlungsfunktionen und Datenbasen (VLR1...) zur Verwaltung von Teilnehmerdaten sowie von Daten für die Anrufbehandlung aufweist, von denen zumindestens eine Gruppenanruf-Datenbasis die zur Behandlung der Gruppenanrufe erforderlichen Gruppenanrufdaten enthält, und mit einem Betriebs- und Wartungsteilsystem (OMS) zur Durchführung von Funktionen für den Betrieb des Mobilfunksystems und für die Erfassung von Informationen über das Mobilfunksystem,
**dadurch gekennzeichnet**,
daß die Gruppenanruf-Datenbasis eine zentrale Datenbasis (MGCR), die mit dem Betriebs- und Wartungsteilsystem (OMS) verbunden ist, und zumindestens eine dezentrale Datenbasis (SGCR), die jeweils mit einer Mobilvermittlungsstelle (MSC1 ...) verbunden ist, aufweist und
daß die zentrale Datenbasis (MGCR) mit den dezentralen Datenbasen (SGCR) verbunden ist, um Änderungen an den Gruppenanrufdaten von der zentralen Datenbasis (MGCR) durchzuführen und Daten nur zu den von den Änderungen betroffenen dezentralen Datenbasen (SGCR) zu übertragen.

2. Mobilfunksystem nach Anspruch 1,
**dadurch gekennzeichnet**,
daß die Änderungen der Gruppenanrufdaten in der zentralen Datenbasis (MGCR) einen Gruppenanruf betreffen, bei dem zur Kommunikation einer Gruppe von Teilnehmern mehrere Funkteilnehmer in einer Funkzelle des funktechnischen Teilsystems (BSS) beteiligt sind.

3. Mobilfunksystem nach Anspruch 1,
**dadurch gekennzeichnet**,
daß die Änderungen der Gruppenanrufdaten in der zentralen Datenbasis (MGCR) einen Gruppenanruf betreffen, bei dem von einem Teilnehmer eine Kommunikation mit einer Gruppe von in einem Gruppenanruf-Versorgungsbereich befindlichen Funkteilnehmern begonnen wird.

4. Mobilfunksystem nach einem der Ansprüche 1 bis 3,
**dadurch gekennzeichnet**,
daß ein aus einer Funkzelle des Mobilvermittlungsstellen-Versorgungsbereichs eintreffender Gruppenanruf an eine für den Gruppenanruf-Versorgungsbereich zuständige Mobilvermittlungsstelle (z.B. MSC1) anhand einer ständigen Leitwegkennung direkt weitergelenkt wird.

5. Mobilfunksystem nach einem der Ansprüche 1 bis 3,
**dadurch gekennzeichnet**,
daß ein aus einem anderen Kommunikationssystem ankommender Gruppenanruf von einer Zugangs-Mobilvermittlungsstelle (GMSC) empfangen und an eine für den Gruppenanruf-Versorgungsbereich zuständige Mobilvermittlungsstelle (z.B. MSC1) anhand einer ständigen Leitwegkennung direkt weitergelenkt wird

6. Mobilfunksystem nach einem der vorhergehenden Ansprüche,
**dadurch gekennzeichnet**,
daß die Gruppenanrufdaten eine Liste von Funkzellen, die zu einem von einer Mobilvermittlungsstelle (z.B. MSC1) bedienten Versorgungsbereich gehören, umfassen, die durch zum Versorgungsbereich hinzukommende Funkzellen oder durch vom Versorgungsbereich wegfallende Funkzellen geändert wird und daß die Änderung der Liste von der zentralen Datenbasis (MGCR) durchgeführt und den dezentralen Datenbasen (SGCR), die zu den die betroffenen Funkzellen versorgenden Mobilvermittlungsstellen gehören, mitgeteilt wird.

7. Mobilfunksystem nach einem der vorhergehenden Ansprüche,
**dadurch gekennzeichnet**,
daß Informationen zwischen der zentralen Datenbasis (MGCR) und den dezentralen Datenbasen (SGCR) über ein mobilfunkspezifisches Anwenderprotokoll übertragen werden.
